# FASCICULE DE BREVET EUROPEEN

(11) **EP 1 032 930 B1**
(45) Date de publication et mention de la délivrance du brevet: **16.04.2003**
(21) Numéro de dépôt: 97929044.2
(22) Date de dépôt: 03.07.1997
(51) Int. Cl.: G09B 15/04

(54) **DISPOSITIF ET PROCEDE D'INTERPRETATION D'UNE OEUVRE MUSICALE A PARTIR DE LA PARTITION**
METHODE UND VORRICHTUNG ZUR INTERPRETATION EINES MUSIKSTÜCKES AUSGEHEND VON DER PARTITUR
DEVICE AND METHOD FOR PLAYING MUSIC FROM A SCORE

(30) Priorité: 08.07.1996 BE 9600617
(43) Date de publication de la demande: 06.09.2000
(73) Titulaire: CONTINENTAL PHOTOSTRUCTURES SPRL, 1060 Bruxelles (BE)
(72) Inventeur: Ladyjensky, Jacques, 1000 Bruxelles (BE)
(74) Mandataire: Colens, Alain
(86) Numéro de dépôt international: BE9700077
(87) Numéro de publication internationale: WO98001842

(56) Documents cités:
- EP-A- 0 057 335
- CH-A- 496 291
- US-A- 3 460 425
- US-A- 3 754 495
- US-A- 4 098 165
- PATENT ABSTRACTS OF JAPAN vol. 95, no. 3, 28 Avril 1995 & JP 06 332443 A (MATSUSHITA ELECTRIC IND CO LTD), 2 Décembre 1994,

## Description

La présente invention concerne un dispositif et un procédé d'interprétation d'une oeuvre musicale à partir d'une partition traditionnelle utilisée comme clavier, accessible à des interprètes n'ayant aucune expérience particulière quant à la pratique d'un instrument ordinaire et des règles de l'écriture musicale.

Selon l'invention un interprète peut de façon aisée et performante jouer une oeuvre musicale en touchant successivement, au moyen d'un pointeur spécial, les notes qui figurent sur les portées de la partition d'écriture traditionnelle.

Il existe déjà des tableaux destinés à l'enseignement de la musique, sur lesquels on fait figurer une portée avec les notes de la gamme, ces notes ainsi que le tableau qui les supporte étant construites de façon telle que, reliés électriquement à un générateur de sons, on entende chaque fois qu'on touche une note du tableau, le son correspondant. On peut toucher la note soit avec le doigt, soit avec une touche ou un bâton, relié électriquement par un fil au générateur sonore. Plusieurs brevets ont été accordés pour des dispositifs de ce genre, parmi ceux-ci on peut citer le brevet allemand 2941630; plusieurs autres brevets ont été accordés pour des perfectionnements, parfois de détails.

Ainsi le brevet US 4098165 divulgue un dispositif pour simultanément lire et interpréter une oeuvre musicale, au départ du texte de la partition musicale traditionnelle écrite de ladite oeuvre, comprenant un générateur de sons et un pointeur. Les signaux électriques sont transmis par des lignes conductrices épousant les lignes de portée ce qui limite énormément le nombre de lignes de notation musicale.

La présente invention utilise un principe analogue à celui décrit dans le brevet allemand 2914630 et les brevets de perfectionnement susmentionnés, non pas -ou en tout cas pas seulement - pour illustrer de manière sonore l'écriture de la gamme musicale, mais pour jouer à proprement parler, c'est à dire "interpréter", toute une oeuvre musicale, en l'exécutant même avec davantage de virtuosité et de sensibilité que si on la jouait sur le clavier d'un instrument ordinaire. En outre cette interprétation peut se faire avec moins de connaissances musicales, et moins d'entraînement pratique, que lorsque l'on utilise un instrument ordinaire.

On utilise la partition musicale écrite de l'oeuvre destinée à être jouée - telle que l'a écrite sur le papier le compositeur ou l'arrangeur - en touchant successivement chaque note au moyen de la pointe d'une touche sensitive spéciale, ou pointeur, tenue en main.

La partition écrite traditionnelle sur support papier ou support équivalent est traitée par pages successives, une page à la fois. On dépose la page sur une tablette graphique numérique telle qu'il en existe dans le commerce de matériel informatique, associé avec un petit ordinateur constitué comme indiqué ci-après. Du fait de la constitution de celui-ci et d'un programme approprié la tablette graphique reconnaît chaque position (abscisse, ordonnée) de point touché par un pointeur approprié en forme de crayon, tenu en main par l'interprète, et en particulier les positions où figurent une note de la mélodie à interpréter.

Le signal ainsi identifié par l'ordinateur provoque l'émission d'un train de signaux ,p.e. de signaux MIDI, envoyés dans un générateur de sons qui délivre la note correspondante.

On a ainsi affaire à un "clavier" qui permet à l'interprète de jouer les notes de son choix (pourvu qu'elles figurent sur la partition) et à son gré en ce qui concerne la succession des notes et le tempo. Il peut notamment, comme sur un vrai clavier, passer des notes, revenir en arrière etc..

Le pointeur comporte un transducteur qui transmet à l'ordinateur au gré de l'interprète l'envoi de signaux agissant sur un ou plusieurs paramètres du son de la mélodie. Typiquement, ce transducteur est un capteur de pression dont le signal traduit la pression exercée par l'interprète en direction de la tablette (via une tige axiale du pointeur), en régulation du volume de la mélodie. D'autres transducteurs, situés par exemple sur les flancs du pointeur, peuvent agir sur des paramètres du son tels que vibrato, réverbérations, etc..

En outre la tige axiale du pointeur, qui est destinée à commander son capteur de pression- via la course qu'elle décrit selon la force exercée par l'interprète est avantageusement pourvue de deux petits interrupteurs actionnés successivement, dans le sens de la course, et dont la fonction est d'envoyer à l'ordinateur une indication de la vitesse de course, qui sera traduite - et ceci de façon connue,- par une indication de "vélocité de frappe" envoyée au générateur de sons, qui la traite pour colorer le son en conséquence. Ceci est surtout intéressant pour les sons de piano.

Avec les dispositions ainsi décrites, on comprend que l'interprète peut traduire littéralement note par note toute nuance d'interprétation qu'il veut exprimer.

Pour la programmation du logiciel de l'ordinateur, la surface de la tablette graphique est fictivement divisée en un grand nombre de rectangles, de préférence tous égaux, dont la base (en abscisse) est p.e. de l'ordre de 2 ou 3 fois le diamètre des têtes de note de la mélodie, et dont la hauteur (en ordonnée) est égale au pas dont sont distants entre eux les portées ou les couples de portées qui constituent l'écriture de la partition. Ces couples de portées, souvent appelés "systèmes" par les musiciens, sont constitués d'une portée sur laquelle est décrite la mélodie, associée à une portée sur laquelle est écrit l'accompagnement harmonique.

En imprimant la partition sur support papier (ou similaire) on doit s'arranger pour que chaque tête de note de la mélodie corresponde à un de ces rectangles fictifs prédéterminés. A part cette contrainte, l'écriture de la mélodie sur la partition est conventionnelle.

L'ordinateur, programmé en conséquence, a donc comme fonction d'identifier sur quel rectangle l'interprète est en train de poser son pointeur. La résolution demandée à la tablette graphique n'a donc pas besoin d'être très fine, se bornant aux dimensions d'un de ces rectangles. Pour jouer une note, l'interprète touche la tête de celle-ci, mais en réalité il suffit qu'il soit dans le rectangle considéré et il n'y a pas besoin d'une précision accentuée.

Cet état de choses permet la disposition suivante. La présence du pointeur dans un rectangle considéré a comme effet, via une programmation appropriée, d'émettre aussi le train de signaux destinés à commander , au générateur, les sons correspondants à l'accompagnement harmonique associé à cet endroit avec la note de mélodie correspondante. Il s'agit souvent d'un accord comportant plusieurs sons simultanés. L'interprète peut porter toute son attention sur les notes de la mélodie, dont il a à détailler l'interprétation dans les moindres nuances en les utilisant comme un clavier, tandis que les sons d'accompagnement eux, au contraire, lui seront délivrés d'office, sans que sa volonté les appelle. Il n'est pas nécessaire que le détail de l'écriture des accords d'accompagnement soit dessiné en entier sur la portée d'accompagnement, ou alors ces détails peuvent être dessinés en petit, ce qui procure à l'ensemble un gain de place apprécié. Selon un mode de réalisation particulier, l'accompagnement peut, tout en étant joué, ne pas du tout être représenté sur la partition.

Comme le présent dispositif est surtout destiné aux personnes qui ne sont pas expertes en interprétation musicale sur des claviers conventionnels, les nuances d'interprétation qui leurs sont permises, tout en étant très riches, se limitent à la mélodie. Il est toutefois prévu que certains paramètres peuvent être régulés pour l'accompagnement séparé, et ceci selon des voies connues en particulier pour son volume, son degré de réverbération etc.., mais ces réglages n'égalent pas la performance de l'interprétation note-à-note que le présent procédé permet pour la mélodie.

L'invention sera mieux comprise à l'examen des dessins fournis en annexe à titre d'exemple uniquement.

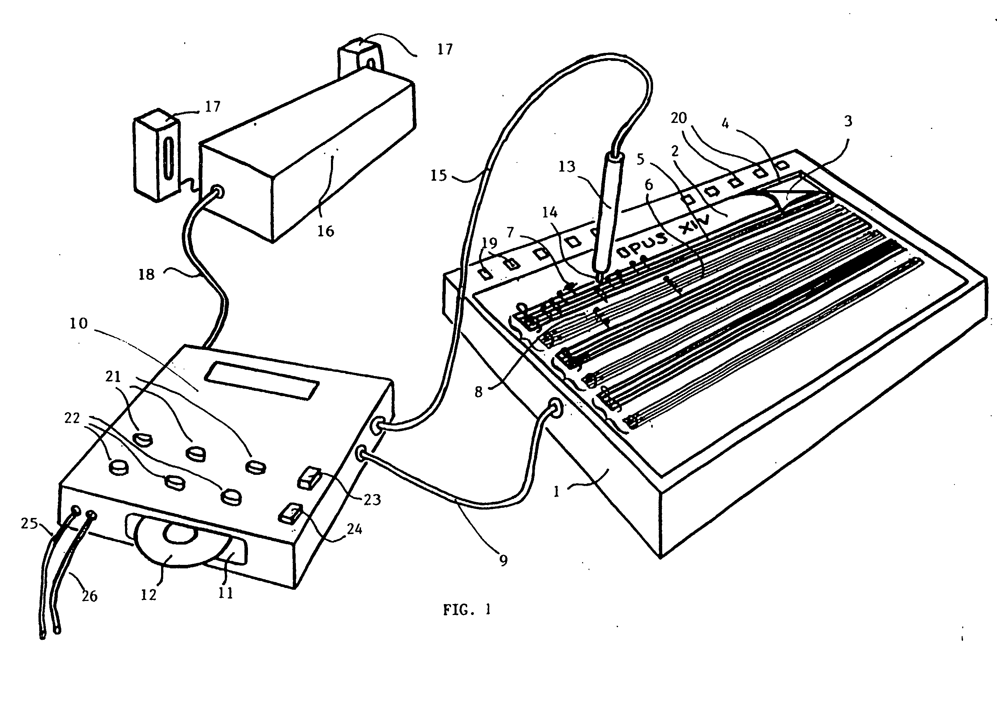

La fig. 1 représente en perspective la tablette graphique 1 sur laquelle est disposée la partition 2, qui est une feuille de papier dont un coin a été relevé en 3. La tablette graphique comporte assez classiquement un petit encastrement périphérique 4 qui assure à la feuille un bon calage bien reproductible. La partition comprend un jeu de portées impaires 5 sur lesquelles sont inscrites les notes de la mélodie, telles 7, et un jeu de portées paires 6 porteuses des notes figurant l'accompagnement, typiquement groupées en accords tels que 8. La tablette graphique 1 est relié via un cable de connection 9, à un petit ordinateur 10 qui contient des processeurs, des mémoires, leurs accessoires et un lecteur de disquette 11.

On n'a représenté ici schématiquement que trois paires de portées- encore appelés "systèmes"- quoique une oeuvre musicale en comporte généralement davantage.

Pour interpréter une oeuvre, l'interprète commence par mettre en place la partition 2 et charge la disquette 12 qui lui est associée et qui contient la mémoire des données relatives à cette partition. Il prend alors en main le pointeur 13 et de la pointe 14 de ce dernier, il touche la tête de note de la mélodie, ou son environnement immédiat, qu'il désire faire entendre. Le pointeur est connecté au petit ordinateur 10 par un cordon 15 sur la présente figure. On peut envisager une liaison qui dispense de cordon, via des moyens connus (transmission par champ de proximité sur la tablette, transmission IR etc..)

Chaque note de la mélodie se trouve à l'intérieur d'un rectangle programmé, abscisses et ordonnées, à la tablette graphique, mais ces rectangles n'ont pas à être dessinés sur la partition, de telle sorte qu'ils n'apparaissent pas sur la figure. Lorsque le pointeur pénètre dans un de ces rectangles fictifs, le son qui correspond à la note qui s'y trouve est émis en signaux MIDI par l'ordinateur 10, en direction du générateur de son 16 accompagné de ses haut-parleurs 17, lequel générateur de sons est connecté à l'ordinateur 10 au moyen du câble 18. A noter qu'on peut avantageusement combiner la tablette graphique, l'ordinateur qui est compact, et le synthétiseur de sons, en un seul appareil ou "instrument de musique" sous boîtier unique.

Les rectangles fictifs ayant toujours comme hauteur celle d'un système de deux portées, le pointeur lorsqu'il pénètre dans un rectangle, déclenche aussi dans l'ordinateur les signaux nécessaires pour faire jouer les notes d'accompagnement pour autant qu'il en figure dans le rectangle considéré. C'est le cas par exemple pour la note mélodique 7 qui se trouve dans le même rectangle fictif que l'accord d'accompagnement 8.

Etant donné que l'attention de l'interprète se porte sur les notes de la mélodie, qu'il doit décrire avec attention comme s'il s'agissait d'un clavier, et que ledit interprète peut négliger de prêter l'oeil aux accords d'accompagnement dont les sons lui sont délivrés de manière asservi, on a dessiné les portées d'accompagnement ainsi que leurs notes en des tailles plus petites que les portées de la mélodie.

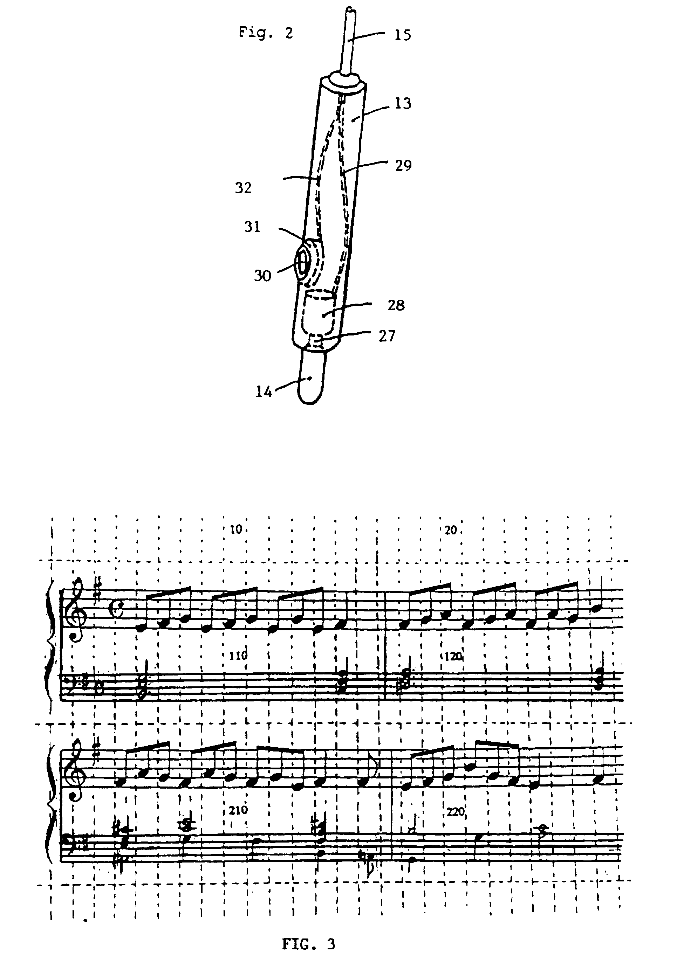

La figure 3 illustre une disposition des rectangles fictifs indiqués en pointillé.

Une fois qu'il a choisi quelle note il va jouer, l'interprète n'a pas la capacité de modifier la hauteur nominale du son qu'il déclenche, celle-ci étant programmée à l'avance sur les données de la disquette. Il peut néanmoins, selon un aspect essentiel de l'invention, agir à son gré sur plusieurs paramètres sonores de ce son, comme décrit ci-après.

Une rangée de positions abscisse-ordonnée de la tablette graphique, telle 19, a été programmée pour que touchée par le pointeur, il est assigné l'instrument à jouer pour la mélodie, sur tel ou tel canal du générateur de sons, au choix de l'interprète. De même pour la rangée 20, en ce qui concerne le ou les instruments à sélectionner pour l'accompagnement. Ces instructions, comme toutes les autres, se traduisent en signaux MIDI synthétisés par l'ordinateur 10 grâce au programme que comporte son logiciel.

De sa main restée libre, l'interprète peut, pendant qu'il joue, actionner les boutons 21 qui agissent respectivement sur les vibrato, le réverb et le portamento des sons de la mélodie. Il en est de même pour les boutons 22 en ce qui concerne les sons de l'accompagnement.

Si l'interprète désire prolonger la durée d'une note de mélodie, il lui suffit évidemment de s'y attarder avec le pointeur; mais s'il désire prolonger le son de ladite note pendant qu'il est en train de jouer les suivantes (effet sustain) il lui est possible d'actionner, pendant la durée souhaitée, le bouton poussoir 23. Il en est de même cette fois pour l'accompagnement du bouton poussoir 24. En 27 on a figuré un écran d'affichage LED.

La hauteur générale du volume du son de l'accompagnement est réglée par un potentiomètre actionné par une pédale commandée par le pied gauche de l'interprète. Comme dans les cas précédents, le signal variable ainsi envoyé agit sur l'émission de trains de signaux MIDI qui induisent la valeur du volume dans le canal considéré. Cette pédale n'est pas représentée sur la figure 1, mais on peut voir, selon 25, le câble qui va vers elle depuis le boîtier de l'ordinateur 10.

Il en est de même, avec la pédale droite, pour la hauteur générale du volume de son de la mélodie. Mais ce réglage-ci se superpose à celui, beaucoup plus sensible, que permet le capteur de pression qui se trouve sur le pointeur.

La figure 2 représente, en perspective, une exécution possible pour la touche sensitive ou pointeur 13. Elle affecte la forme d'un cylindre connecté par un mince câble souple 15 relié au boîtier de l'ordinateur 10 (voir fig. 1) et se termine par une pointe 14. La pression exercée par l'interprète sur cette pointe se transmet à une tige axiale 27 agissant sur un transducteur 28 qui est dans notre exemple un capteur de pression, qui envoie ses signaux proportionnels via un fil interne 29 puis le petit câble 15. Ces signaux commandent de façon très sensitive le volume de son de la note jouée. Ces éléments internes ont été représentés en pointillé. En 30 on illustre un bouton de commande latéral qui agit sur un transducteur 35; lequel transforme la poussée qu'il reçoit en instructions électriques envoyées elles aussi vers le boîtier 10. On lui assignera par exemple le paramètre vibrato ou le "pitch-bend", pour la note jouée par l'interprète au moment où il la touche.

### Exemple de réalisation

On continue à se référer à la fig. 1.

Sur la feuille de partition, les notes de la mélodie sont dessinées sur les portées impaires et celles représentant les accords d'accompagnement, sur les portées paires. L'exemple considéré reprend le début du refrain du morceau de musique " Les Feuilles Mortes" de Joseph Kosma.

Les portées dessinées de la mélodie comportent 5 lignes espacées de 2,25 mm entre elles. Celles de l'accompagnement comportent 5 lignes espacées de 1,5 mm. la distance entre portées est de 8,75 mm, le pas d'espacement entre paires de portées est de 32,5 mm.

La dimension de la feuille est 420 x 295 mm soit le format DINA3.

La feuille de partition est déposée sur une tablette graphique de marque Wacom, type Ultrapad SN-A3.

La feuille se trouve calée sur la tablette, grâce à la prése ce du petit relief périphérique qui l'équipe, dans une position reproductible avec une précision de l'ordre de 0,2 mm.

La tablette graphique est reliée par des conducteurs du type pour "connexion sérielle" à un boîtier contenant un ensemble formant ordinateur, constitué et programmé de la façon décrite ci-après.

Ce boîtier comporte à une de ses faces un connecteur MIDI-out, destiné à envoyer les signaux MIDI qu'il produit, vers un générateur de son qui est en l'occurrence un synthétiseur Roland JV-90 du commerce.

Dans ce boîtier du petit ordinateur sont assemblés les éléments suivants :
a) deux groupes d'organes de commande :
   1) le premier, destiné à la mélodie, comporte un bouton-poussoir pour le sustain, et 3 boutons rotatifs actionnant des potentiomètres respectivement pour le vibrato, la réverbération et le portamento
   2) le second destiné à l'accompagnement est équipé de même.
b) un lecteur de disquette de type Teac 3 pouces et demi, monté dans le flanc du boîtier et recevant la disquette porteuse de la programmation des données propres à la partition considérée.
c) sur une des faces, 1 connecteur sériel du type DB9 pour la connexion de la tablette graphique, et 2 jacks 6,35 mm pour la connexion des 2 pédales de volume, d'un type à potentiomètre classique.
d) un processeur central Intel 386 EX.
e) la mémoire-programme comporte
   - 1 EPROM 27512 pour le BIOS et le programme d'exécution
   - 1 EEPROM sérielle 24C16 pour la sauvegarde des paramètre de configuration
   - 1 mégabyte de RAM dynamique pour le chargement des données de la partition telles qu'elles sont fournies par la disquettes;
   - 1 EPLD pour le contrôle du générateur I²C lui-même affecté au contrôle des trois éléments suivants : la mémoire EEPROM, les convertisseurs AD des potentiomètres, l'afficheur LCD; cet EPLD contrôle également le lecteur de disquette.
f) une alimentation incorporée
g) un UART pour le MIDI-out

Les éléments de mémoire de l'ordinateur, ainsi que le contenu de la disquette associée à la partition considérée, ont été programmés de la façon suivante.

Les abscisses de la tablette graphique sont divisées en intervalles de 4 mm. Les ordonnées de la tablette graphique sont divisées en intervalles de 32,5 mm, c'est à dire le pas des paires de portées ou "'systèmes". On a donc 420:4=105 fois 295:32.5=9 soit 945 rectangles.

On a pris soin en dessinant la partition que les têtes des notes de la mélodie, dont le diamètre est de 2 mm, soient toujours centrées dans un de ces rectangles. Les rectangles pourraient être dessinés sur la partition, mais c'est inutile.

Les programmations de programme et de données ont été faites pour qu'au moment de la pénétration par le pointeur à l'intérieur de tout rectangle où une note a été assignée, le son mélodique de la hauteur correspondante soit émis, en signaux MIDI, par l'ordinateur, en direction du générateur de sons. De même pour les sons de l'accompagnement harmonique si on en a programmé pour se trouver dans ledit rectangle considéré. Il peut aussi arriver que dans un rectangle où le pointeur pénètre, aucune note de mélodie n'ait été assignée, mais bien des sons d'accompagnement. Ceci, dans le cas où des sons d'accompagnement doivent être délivrés dans un intervalle de temps entre deux notes de la mélodie.

Le pointeur est, dans l'exemple particulier ici considéré, le crayon numérique de type Wacom qui est associé avec une tablette graphique Ultrapad SN-A3 lorsqu'on acquiert celle-ci dans le commerce. Lorsque le pointeur affleure on touche un des rectangles considérés, il envoie son signal vers la tablette, par un processus de réflexion connu en soi, et ce signal est convoyé vers l'ordinateur par le jeu de connexions sérielles dont question ci-avant. Il n'y a donc pas de fil, avec ce pointeur, dans cet exemple.

Par ailleurs, l'extrémité du pointeur agit sur un capteur de pression dont le signal proportionnel est envoyé vers l'ordinateur de la même façon que décrit ci-dessus. La programmation a été réalisée de telle sorte que ledit signal déclenche l'émission de signaux MIDI régulant le volume du son de la mélodie. Le capteur permet de reconnaître 128 niveaux de pression et fournit donc une très bonne sensibilité d'interprétation du volume.

Dans l'exemple considéré, sur le synthétiseur Roland JV-90, il y a 16 canaux appelables et chacun d'eux peut être assigné à un instrument. On peut appeller ou non le même instrument pour la mélodie ou pour l'accompagnement. On peut aussi, pour l'accompagnement, faire jouer plus que 1 instrument si la programmation a été faite en conséquence pour la partition donnée. On peut sur la disquette, programmer "Général MIDI", ou non.

Ces paramètres de vibrato, portamento, reverb et autres du même genre, sont commandés par les boutons situés sur le boîtier de l'ordinateur, cités ci-avant. Il suffit de les assigner au but recherché.

## Revendications

1. Dispositif pour simultanément lire et interpréter une oeuvre musicale, au départ du texte de la partition musicale traditionnelle écrite de ladite oeuvre, comprenant un générateur de sons (16) et un pointeur (13) **caractérisé en ce qu'**il comprend également
- un microordinateur (10) et
- une tablette graphique (1) apte à recevoir une page en papier ou un jeu de pages à traiter consécutivement, formant partition (2), et apte à reconnaître toute position abscisse-ordonnée touchée par l'extrémité (14) du pointeur (13) manié par un interprète, chacun des signaux abscisse-ordonnée ainsi activé de la tablette graphique étant transmis audit microordinateur (10) supportant un logiciel pré-programmé en fonction de la partition considérée, cette programmation étant réalisée de telle sorte que tout couple abscisse-ordonnée ainsi activé sur la tablette apte à recevoir une page déclenche un signal qui initie un train de signaux susceptible d'être envoyé dans le générateur de sons, lequel produit alors la note inscrite sur la partition la plus proche du point de contact avec ledit pointeur (13), et/ou l'accord de sons d'accompagnement (8) approprié.

2. Dispositif selon la revendication 1 **caractérisé en ce que** la résolution des couples abscisses-ordonnées est, en abscisse, d'environ 2 fois le diamètre des têtes de note (7) de la mélodie, et la résolution en ordonnée est la valeur du pas de distance entre portées ou ensembles de portées de ladite partition (2).

3. Dispositif selon la revendication 2 dans lequel les ensembles de portées sont des couples de portées (5, 6), ceux-ci étant formés d'une part par les notes (7) de la mélodie et d'autre part par les notes d'accompagnement (8).

4. Dispositif selon la revendication 2 dans lequel il n'y a que des portées simples et non des couples ou ensembles de portées, ces portées simples étant constituées par les notes (7) de la mélodie, les portées d'accompagnement étant jouées par le dispositif mais n'apparaissant pas sur la partition.

5. Dispositif selon n'importe laquelle des revendications précédentes dans lequel le pointeur (13) comprend au moins un transducteur (35) apte à transmettre au moins un signal de commande d'un paramètre du son, autre que sa hauteur, au générateur (16), les caractéristiques du signal dépendant de l'action exercée par l'interprète sur le dit transducteur (35).

6. Dispositif selon la revendication précédente, **caractérisé en ce que** le pointeur (13) est pourvu d'une pointe (14) actionnant le transducteur (28), intérieur au pointeur, réagissant à la pression exercée par la main de l'interprète en direction de la partition et de la tablette (1), par l'envoi d'un signal commandant un paramètre du son de la mélodie, les caractéristiques du signal étant fonction de la pression exercée.

7. Dispositif selon les revendications 4 et 5 **caractérisé en ce que** le paramètre concerné est le volume du son de la mélodie.

8. Dispositif selon n'importe laquelle des revendications précédentes dans lequel le pointeur (13) est pourvu d'une tige axiale (27) coulissant sous l'effet de la poussée et actionnant lors de sa courses deux petits interrupteurs successivement, envoyant ainsi au logiciel un signal de vélocité de frappe.

9. Dispositif selon n'importe laquelle des revendications précédentes dans lequel le pointeur (13) comprend un ou plusieurs transducteurs (35) situées latéralement sur son corps, le ou lesdits transducteurs secondaires étant sensibles à l'action exercée par les doigts de l'interprète, lesdits transducteurs étant reliés à l'ordinateur (10) supportant le logiciel pour le contrôle d'un ou de plusieurs paramètres secondaires du son.

10. Dispositif selon la revendication 8 dans lequel le ou les paramètres secondaires sont le vibrato , la réverbération, le legato, le portamento vis à vis de la note voisine, le glissando et/ou l'effet de pizzicato.

11. Dispositif selon n'importe laquelle des revendications précédentes dans lequel le pointeur (13) présente une forme allongée, p.e. cylindrique ou prismatique, dont une extrémité est une pointe (14) associée à une tige axiale (27) commandant un transducteur (28).

12. Instrument de musique incorporant au moins un dispositif selon n'importe laquelle des revendications précédentes.

13. Procédé d'interprétation d'une oeuvre musicale dans lequel l'interprète pose une page de papier comportant la partition sur une tablette graphique puis touche successivement à l'aide dudit pointeur une série de positions à son gré selon l'inspiration qui lui est donnée à la vue des têtes de notes de la mélodie inscrite sur la partition, c'est à dire dans l'ordre ou non, selon son rythme et le tempo qu'il désire **caractérisé en ce qu'**il est utilisé un dispositif ou instrument selon n'importe laquelle des revendications précédentes.

## Claims

1. Device for simultaneously reading and playing a work of music, from the written conventional score of said work, including a sound generator (16) and a pointer (13) **characterized** as it includes also
- a microcomputer (10) and
- a graphic tablet (1) able to hold a paper sheet, or a set of sheets to be handled successively, said sheet comprising written music score (2), and able to recognize any X and Y axis positions of the score touched by the tip (14) of the pointer (13) handled by a performer, each of the graphic tablet X and Y signals thus activated being transmitted to said microcomputer (10), which has software preprogrammed according to the said score, said programming being such that any X-Y pair activated on the tablet able to hold a paper sheet triggers a signal that initiates a signal stream for inputting into the sound generator, which then outputs the note closest to the contact point with the pointer (13) on the score, and/or the appropriate chord of accompaniment sounds (8).

2. Device as set forth in claim 1, **characterized in that** the resolution for the X-Y pairs is, in the X axis, about 2 times the diameter of the melody note heads (7), and the resolution in the Y axis is the value of the distance pace between the staffs, or staff sets of said music score (2).

3. Device as set forth in claim 2, wherein the staff sets are staff pairs (5,6), these consisting in, on the one hand, the melody notes (7) staff, and, on the other hand, the accompaniment notes (8) staff.

4. Device as set forth in claim 2 wherein there are only single staffs and no staff pairs or staff sets, said single staffs bearing the melody notes (7), with no representation of accompaniment staffs on the score being played by the device.

5. Device as set forth in anyone of the preceding claims, wherein the pointer (13) comprises at least one transducer (35) able to transmit at least one control signal for a sound parameter, other than its height, to the tone generator (16), with the signal features depending from action exerted by the performer on said transducer (35).

6. Device as set forth in claim 5, wherein the pointer (13) is fitted with a pin (14) acting onto the transducer (28), which is inside the pointer and, in function of the pressure exerted by the performer's hand towards the score and the tablet (1), initiates the sending of a signal controlling one parameter of the melody sound.

7. Device as set forth in claims 4 and 5 wherein the considered parameter is the sonic volume of the melody.

8. Device as set forth in anyone of the preceding claims wherein the pointer is fitted with an axial rod, sliding under the pushing action, and actuating in the course of its stroke, two small switches sequentially, in order to send to the computer software a velocity dependent signal.

9. Device as set forth in anyone of the preceding claims wherein the pointer (13) comprises one or several transducers (35) laterally fitted on its body, said transducer or transducers being sensitive to action by the performer's fingers, said transducer or transducers being linked to the software supporting computer (10) for controlling one or several secondary parameters of the sound.

10. Device as set forth in claim 8 wherein the secondary parameter or parameters are the vibrato, the reverberation, the legato, the portamento towards the neighbour note, the glissando, and/or the pizzicato effect.

11. Device as set forth in anyone of the preceding claims, wherein the pointer (13) has an elongated shape, for instance cylindrical or prismatic, wherein one end is a tip (14), associated with an axial rod (27) acting on a transducer (28).

12. Musical instrument incorporating at least a device according to any of the preceding claims.

13. Method for performing a work of music wherein the performer lays a paper sheet with the score onto the tablet, then touch sequentially with the pointer a succession of positions according to his desire, according his inspiration in viewing the melody note heads written on the score, i.e. sequentially or not, according to his own desired rhythm and tempo **characterized** i that there is used a device or instrument according to any of the preceding claims.

## Patentansprüche

1. Gerät, um ein Musikstück zu lesen und zu gleicher zeit zu spielen, welches vom Text der traditionell geschriebenen Partitur des genannten Werkes startet und welches einen Tongenerator (16) und eine Markierspitze (13) enthält und zudem **dadurch gekennzeichnet ist, dass** es auch enthält:
- einen Mikrocomputer (10) und
- ein graphisches Tablett (1), das sich dazu eignet, eine bzw. Zum folgereichtigen Verarbeiten mehrere Partiturseiten aufzunehmen, und sich dazu eignet, jede Abszisse-Ordinaten-Position zu erkennen, welche durch das vom Spieler geführte Ende der Markierspitze (13) ertastet wird, und dem Merkmal, dass jedes so aktivierte Abszisse-Ordinaten-Signal zu besagtem Mikrocomputer (10) -der mit einer der Partitur entsprechenden vorprogrammierten Software ausgestattet wurde- weitergeleitet wird,
- wobei die Programmierung so ausgeführt wird, dass jedes auf dem Partitur-sensiblen Tablett aktivierte Abszisse-Ordinaten-Paar ein Signal gibt, welches eine Signalserie auslöst, die imstande ist, in den Tongenerator geschickt zu werden, worauf der Tongenerator dann diejenige Note -ebenso wie einen passenden Begleitakkord erzeugt, der auf der Partitur dem mit der Markierspitze (13) am nächsten liegenden Kontaktpunkt entspricht.

2. Gerät nach Anspruch 1 **dadurch gekennzeichnet, dass** die Auflösung der Paare Abszisse-Ordinate bedeutet:
auf der Abszisse: ungefähr zweimal der Durchmesser der Notenköpfe (7) der Melodie,
auf der Ordinate: der Wert des Distanzschrittes zwischen den Notenlinien oder den Notenliniensätzen der Partitur.

3. Gerät nach Anspruch 2., in welchem die Notensätze Notenlinienpaare (5, 6) sind, die einerseits aus Melodienoten (7) und andererseits aus den Begleitnoten bestehen.

4. Gerät nach Anspruch 2, in welchem es nur einfache Notenlinien gibt, und nicht Notenlinienpaare bzw. -sätze, und diese einfachen Notenlinien aus Melodienoten (7) bestehen, ohne dass die Begleitungsnotenlinien auf der Partitur erscheinen, sondern lediglich vom Gerät gespielt werden.

5. Gerät gemäss irgendeiner der vorig aufgeführten Ansprüche, in welchem die Markierspitze (13) mindestens einen Überträger bzw. einen Transduktor (35) enthält, der geeignet ist, mindestens ein für den Generator (16) bestimmtes Steuerungssignal für einen Parameter des Tones, jedoch nicht der Tonhöhe, auszulösen, wobei das Kennzeichen dieses Signals abhängt von der durch den Spieler ausgeführten Aktion auf besagtem Überträger (35).

6. Gerät gemäs irgendeiner der vorig aufgeführten Ansprüche, **gekennzeichnet durch** die Tatsache, dass die Markierspitze (13) mit einer Spitze (14) versehen ist, welche den Transduktor im Inneren des Markiergerätes (28) betätigt, welche außerdem auf den **durch** die Hand des Spielers und das graphische Tablett ausgeübten Druck empfindlich reagiert und damit ein Signal auslöst, welches seinerseits ein Signal eines Melodie-Parameters abruft, der je nach ausgeübtem Druck das Signal zu einer Funktion gibt.

7. Gerät nach Ansprüchen 4. und 5., **gekennzeichnet durch** die Tatsache, dass der besagte Parameter die Fülle des Melodietons ist.

8. Gerät gemäss irgendeiner der vorig aufgeführten Ansprüche, in dem die Markierspitze (13) mit einem längs ihrer Achse gelegenen, hoch druckempfindlichen Schaft versehen ist, der dann im Spiel sich dazu eignet, zwei kleine aufeinander folgende Schalter zu betätigen, die ihrerseits an die Software ein Signal für die Kraft des Anschlags senden.

9. Gerät gemäs irgendeiner der vorig aufgeführten Ansprüche, in dem die Markierspitze (13) einen oder mehrere seitlich längs ihrer Rahmen gelegenen Überträger (35) enthält, die sich als sensible Hilfs-Überträger für das Spiel der Finger erweisen und mit dem Mikrocomputer verbunden sind, der die Kontroll-Software für einen oder mehrere Ton-Parameter enthält.

10. Gerät nach Anspruch 8, in dem die Hilfsparameter das Vibrato, der Echo-Effekt, das Legato, das Portamento zur nächsten Note, das Glissando oder das Pizzicato sind.

11. Gerät gemäss irgendeiner der aufgeführten Ansprüche, in dem die Markierspitze (13) eine längliche Form hat, z. B. zylindrisch oder prismatisch, von welcher das eine Ende eine mit einem axialen Schaft (27) verbundene Spitze ist und besagter Schaft einen Überträger bzw. Transduktor (28) betätigt.

12. Musikinstrument mit mindestens einem Gerät gemäss irgendeines der vorig aufgeführten Ansprüche.

13. Verfahren, um ein Musikstück zu spielen, in dem:
■ der Spieler das Blatt einer Partitur auf ein graphisches Tablett legt,
■ dann in beliebiger Folge mit einer Markierspitze eine Reihe von Stellungen anrührt, entsprechend der ihm einfallenden Anregungen durch den Anblick der Notenköpfe der in der Partitur beschriebenen Melodie,
■ das heisst, der Reihe nach je nach seinem eigenen Verständnis von Rhythmus und Tempo
■ und das **dadurch gekennzeichnet ist, dass** ein Gerät bzw. Instrument gemäss aller vorig aufgeführter Ansprüche verwendet wird.
